(19) **Europäisches Patentamt / European Patent Office / Office européen des brevets**

(11) **EP 4 597 628 A1**

(12) **EUROPEAN PATENT APPLICATION**
published in accordance with Art. 153(4) EPC

(43) Date of publication:
**06.08.2025 Bulletin 2025/32**

(21) Application number: **23924679.6**

(22) Date of filing: **02.03.2023**

(51) International Patent Classification (IPC):
**H01M 4/58** $^{(2010.01)}$

(52) Cooperative Patent Classification (CPC):
**H01M 4/58;** Y02E 60/10

(86) International application number:
**PCT/CN2023/079258**

(87) International publication number:
**WO 2024/178711 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Central (HK)**

(72) Inventors:
• **DENG, Jingxian
Ningde, Fujian 352100 (CN)**

• **WANG, Jiazheng
Ningde, Fujian 352100 (CN)**
• **LV, Zijian
Ningde, Fujian 352100 (CN)**
• **LIU, Liangbin
Ningde, Fujian 352100 (CN)**
• **XIE, Shuai
Ningde, Fujian 352100 (CN)**

(74) Representative: **Jacob, Reuben Ellis
Maucher Jenkins
Seventh Floor Offices
Artillery House
11-19 Artillery Row
London SW1P 1RT (GB)**

(54) **SILICON-BASED NEGATIVE ELECTRODE ACTIVE MATERIAL AND PREPARATION METHOD THEREFOR, SECONDARY BATTERY, AND ELECTRIC DEVICE**

(57)    A silicon-based negative electrode active material, comprising $M_2Si_2O_5$ and M2SiO3, wherein M comprises one or more alkali metal elements; in an XRD pattern of the silicon-based negative electrode active material, a diffraction angle $2\theta$ has a first diffraction peak in the range of 24°-25°, and the half-peak width of the first diffraction peak is $\beta_A$; the diffraction angle $2\theta$ has a second diffraction peak in the range of 26°-27°, and the half-peak width of the second diffraction peak is $\beta_B$; and the silicon-based negative electrode active material meets the equation: $1.0 \leq \beta A / \beta B \leq 2.5$.

FIG. 1

EP 4 597 628 A1

**Description**

**TECHNICAL FIELD**

This application relates to the field of battery technologies, and in particular, to a silicon-based negative electrode active material and a preparation method therefor, a secondary battery, and a power consuming apparatus.

**BACKGROUND**

In recent years, as the application scope of secondary batteries becomes increasingly wider, secondary batteries are widely used in energy storage power supply systems such as hydroelectric power stations, thermal power stations, wind power stations, and solar power stations, as well as a variety of fields such as power tools, electric bicycles, electric motorcycles, electric vehicles, military equipment, and aerospace.

Silicon-based negative electrode active materials are considered to be promising silicon-based negative electrode active materials for secondary batteries. With the rapid development of secondary batteries, higher requirements are posed on electrochemical performance of silicon-based negative electrode active materials.

**SUMMARY**

In view of the foregoing issue, this application provides a novel silicon-based negative electrode active material and a preparation method therefor, a secondary battery, and a power consuming apparatus, which are respectively described below.

According to a first aspect, this application provides a silicon-based negative electrode active material, including $M_2Si_2O_5$ and $M_2SiO_3$, where M includes one or more alkali metal elements; in an XRD diffraction pattern of the silicon-based negative electrode active material, a diffraction angle $2\theta$ has a first diffraction peak ranging from 24° to 25°, and a half-peak width of the first diffraction peak is $\beta_A$; the diffraction angle $2\theta$ has a second diffraction peak ranging from 26° to 27°, and a half-peak width of the second diffraction peak is $\beta_B$; and the silicon-based negative electrode active material satisfies $1.0 \leq \beta_A/\beta_B \leq 2.5$.

The negative electrode active material based on the above solution not only has a high energy density, but also has good initial coulombic efficiency and cycle life. Although the mechanism is not very clear, the above performance improvement may be related to grain sizes and distribution of $M_2Si_2O_5$ grains and $M_2SiO_3$ grains in the silicon-based negative electrode active material. When a ratio of the half-peak width $\beta_A$ to $\beta_B$ of an XRD diffraction peak ranges from (1.0 to 2.5):1, the $M_2Si_2O_5$ grains and the $M_2SiO_3$ grains have improved positional distribution of size distribution in the silicon-based negative electrode active material. Such a microstructure helps to alleviate a volume expansion problem of the silicon-based negative electrode active material in a cycle process, thereby improving electrochemical performance of the silicon-based negative electrode active material.

In some embodiments, the ratio of $\beta_A$ to $\beta_B$ is $1.2 \leq \beta_A/\beta_B \leq 2.2$, and is optionally $1.3 \leq \beta_A/\beta_B \leq 2.0$. Based on this solution, the silicon-based negative electrode active material shows further improved cycle life.

In some embodiments, $0.8° \leq \beta_A \leq 1.70°$, and optionally, $0.85° \leq \beta_A \leq 1.30°$. Based on this solution, the silicon-based negative electrode active material shows further improved cycle life.

In some embodiments, a value of $\beta_B$ is $0.40° \leq \beta_B \leq 1.15°$, and is optionally $0.50° \leq \beta_B \leq 0.95°$. Based on this solution, the silicon-based negative electrode active material shows further improved cycle life.

In some embodiments, a peak intensity ratio of the first diffraction peak to the second diffraction peak ranges from (0.15 to 0.6):1. In this solution, the silicon-based negative electrode active material has improved cycle life.

In some embodiments, the XRD diffraction pattern of the silicon-based negative electrode active material further includes a third diffraction peak of the diffraction angle $2\theta$ ranging from 28° to 29°, and a peak intensity ratio of the first diffraction peak to the third diffraction peak ranges from (0.2 to 0.6):1. In this solution, the silicon-based negative electrode active material has improved cycle life.

In some embodiments, the XRD diffraction pattern of the silicon-based negative electrode active material further includes the third diffraction peak of the diffraction angle $2\theta$ ranging from 28° to 29°, and a peak intensity ratio of the second diffraction peak to the third diffraction peak ranges from (1 to 1.45):1.

In some embodiments, a grain size of the $M_2Si_2O_5$ is smaller than a grain size of the $M_2SiO_3$. Based on this solution, the silicon-based negative electrode active material shows further improved cycle life.

In some embodiments, the grain size of the $M_2Si_2O_5$ ranges from 5 nm to 10 nm, and optionally ranges from 6 nm to 9 nm. Based on this solution, the silicon-based negative electrode active material shows further improved cycle life.

In some embodiments, the grain size of the $M_2SiO_3$ ranges from 6 nm to 20 nm, and optionally ranges from 11 nm to 18 nm. Based on this solution, the silicon-based negative electrode active material shows further improved cycle life.

In some embodiments, at least part of a surface of the silicon-oxygen composite has a coating layer; and optionally, the coating layer includes a carbon material. Based on this solution, the silicon-based negative electrode active material shows further improved cycle life.

In some embodiments, a specific surface area of the silicon-based negative electrode active material is 4 m$^2$/g or less, and optionally ranges from 0.5 m$^2$/g to 1.5 m$^2$/g. Based on this solution, the silicon-based negative electrode active material shows further improved cycle life.

In some embodiments, a volume average particle size Dv50 of the silicon-based negative electrode active material ranges from 4 $\mu$m to 15 $\mu$m, and optionally ranges from 5 $\mu$m to 9 $\mu$m. Based on this solution, the silicon-based negative electrode active material shows further improved cycle life.

In some embodiments, a particle size distribution (Dv90-Dv10)/Dv50 of the silicon-based negative electrode active material ranges from 0.5 to 3.0, and optionally ranges from 0.8 to 1.3. Based on this solution, the silicon-based negative electrode active material shows further improved cycle life.

In some embodiments, free alkali metal elements account for 1 wt% or less of a total content of alkali metal elements in the silicon-based negative electrode active material, and optionally account for 0.5 wt% or less. Based on this solution, the silicon-based negative electrode active material shows further improved cycle life.

In some embodiments, a content of Si in the silicon-based negative electrode active material ranges from 20 wt% to 80 wt%, and optionally ranges from 30 wt% to 60 wt%. Based on this solution, the silicon-based negative electrode active material shows further improved cycle life.

In some embodiments, the total content of alkali metal elements in the silicon-based negative electrode active material ranges from 2 wt% to 14 wt%, and optionally ranges from 2 wt% to 10 wt%. Based on this solution, the silicon-based negative electrode active material shows further improved cycle life.

In some embodiments, a Si:O molar ratio of the silicon-based negative electrode active material ranges from 1:(0.6 to 1):1.8, and optionally ranges from 1:(0.9 to 1):1.5.

In some embodiments, M includes at least one of Li, Na, and K. Based on this solution, the silicon-based negative electrode active material shows further improved cycle life.

According to a second aspect, this application provides a preparation method for the above silicon-based negative electrode active material, including the following steps:

providing a raw material containing Si and O;
heating the raw material by using a vapor deposition technique to form vapor, and cooling a deposit formed by the vapor;
crushing the deposit to obtain a crushed product; and
mixing the crushed product and an alkali metal source, heating the mixture to 450°C to 800°C at a heating rate of 5°C/min or less, and keeping the temperature for 3 h to 10 h to obtain the silicon-based negative electrode active material.

In some embodiments, the raw material includes elemental silicon and silicon dioxide.

In some embodiments, when vapor deposition is performed, a target temperature for heating ranges from 1100°C to 1500°C.

In some embodiments, when vapor deposition is performed, a target temperature for cooling ranges from 700°C to 900°C.

In some embodiments, vapor deposition is performed in an environment with an absolute pressure of 40 Pa or less.

In some embodiments, the crushed product and the alkali metal source are mixed in a mass ratio ranging from 100:(6 to 11).

In some embodiments, the preparation method for the silicon-based negative electrode active material further includes the following step: performing coating treatment on the silicon-based negative electrode active material, where optionally, the coating treatment is carbon material coating treatment; and further optionally, the carbon material coating treatment includes the following operations: placing the silicon-based negative electrode active material in a chamber containing a carbon source gas, heating the silicon-based negative electrode active material to 700°C to 1000°C, and keeping the temperature for 1 h to 6 h

According to a third aspect, this application provides a secondary battery, including a negative electrode, where the negative electrode includes the above silicon-based negative electrode active material.

According to a fourth aspect, this application provides a power consuming apparatus, including the above secondary battery.

Beneficial effects:

One or more embodiments of this application have one or more of the following:

(1) The silicon-based negative electrode active material has an increased capacity.

(2) The silicon-based negative electrode active material has improved initial coulombic efficiency.

(3) The silicon-based negative electrode active material has an improved cycle capacity retention rate.

BRIEF DESCRIPTION OF THE DRAWINGS

FIG. 1 shows an XRD pattern of a silicon-based negative electrode active material according to an embodiment of this application;

FIG. 2 is a schematic diagram of a secondary battery and an exploded view of the secondary battery according to an embodiment of this application;

FIG. 3 is a schematic diagram of a battery module according to an embodiment of this application;

FIG. 4 is a schematic diagram of a battery pack according to an embodiment of this application;

FIG. 5 is an exploded view of the battery pack according to an embodiment of this application as shown in FIG. 4; and

FIG. 6 is a schematic diagram of a power consuming apparatus using a secondary battery according to an embodiment of this application as a power source.

Reference numerals:

1: battery pack; 2: upper box body; 3: lower box body; 4: battery module; 5: secondary battery; 51: housing; 52: electrode assembly; and 53: top cover assembly.

## DETAILED DESCRIPTION

Embodiments of a silicon-based negative electrode active material and a method for preparing the same, a positive electrode plate, a negative electrode plate, a secondary battery, a battery module, a battery pack, and a device of this application are specifically disclosed in detail below appropriately with reference to detailed descriptions of the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by a person skilled in the art. In addition, the accompanying drawings and the following descriptions are provided for a person skilled in the art to fully understand this application, and are not intended to limit the subject matter described in the claims.

A "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of this application may be combined with each other to form new technical solutions.

Unless otherwise specified, all steps of this application may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

In this specification, ppm (parts per million) is parts per million. However, ppm, when used to describe a content of an element, refers to a parts per million of a mass of the element in a silicon-based negative electrode active material to a mass of the silicon-based negative electrode active material.

The terms "include", "comprise", and "contain" are intended to cover target objects or steps in an open manner, that is, inclusion of other objects or steps is not excluded. "Including", "comprising", or "containing" an object means that the object is present in a content greater than zero, for example, 1% to 10%, 10% to 20%, 20% to 30%, 30% to 40%, 40% to 50%, 50% to 60%, 60% to 70%, 70% to 80%, 80% to 90%, or 90% to 100%. In a nonspecific example, "including", "comprising", or "containing" an object includes a case in which the object itself is constituted.

[Secondary battery]

Secondary batteries, also referred to as rechargeable batteries or storage batteries, are batteries whose active material can be activated through charging for continuous use after the batteries are discharged.

Generally, a secondary battery includes a positive electrode plate, a negative electrode plate, a separator, and an electrolyte solution. In a charge process and a discharge process of the battery, active ions (for example, sodium ions) are intercalated and deintercalated back and forth between the positive electrode plate and the negative electrode plate. The separator is arranged between the positive electrode plate and the negative electrode plate, mainly to prevent a short circuit between positive and negative electrodes and to allow active ions to pass through. The electrolyte solution is between the positive electrode plate and the negative electrode plate, mainly to conduct active ions.

The secondary battery is, for example, a lithium-ion battery. The lithium-ion battery mainly includes a positive electrode, a negative electrode, a separator, and an electrolyte solution. The positive and negative electrodes are separated by the separator to prevent a short circuit, and the positive and negative electrodes are infiltrated by the electrolyte solution to ensure ion conduction. During charging, $Li^-$ is deintercalated from the positive electrode, passes through the separator through the electrolyte solution, and is intercalated into the negative electrode, so that the positive electrode is in a high-potential sodium-poor state and the negative electrode is in a low-potential sodium-rich state. A discharge process is opposite to the charging. $Li^+$ is deintercalated from the negative electrode, passes through the separator through the electrolyte solution, and is intercalated into the positive electrode material, so that the positive electrode returns to the sodium-rich state. To maintain balance of charges, a same quantity of electrons are transferred through an external circuit in the charge and discharge processes, and the electrons migrate, together with $Li^+$, between the positive and negative electrodes, causing an oxidation reaction and a reduction reaction on the positive electrode and the negative electrode respectively. The lithium ions can reversibly migrate between the positive electrode and the negative electrode in the electrolyte solution. Both the positive electrode and the negative electrode are made of intercalation materials that allow lithium ions to be reversibly intercalated and deintercalated.

The secondary battery is, for example, a sodium-ion battery. The sodium-ion battery mainly includes a positive electrode, a negative electrode, a separator, and an electrolyte solution. The positive and negative electrodes are separated by the separator to prevent a short circuit, and the positive and negative electrodes are infiltrated by the electrolyte solution to ensure ion conduction. During charging, $Na^-$ is deintercalated from the positive electrode, passes through the separator through the electrolyte solution, and is intercalated into the negative electrode, so that the positive electrode is in a high-potential sodium-poor state and the negative electrode is in a low-potential sodium-rich state. A discharge process is opposite to the charging. $Na^+$ is deintercalated from the negative electrode, passes through the separator through the electrolyte solution, and is intercalated into the positive electrode material, so that the positive electrode returns to the sodium-rich state. To maintain balance of charges, a same quantity of electrons are transferred through an external circuit in the charge and discharge processes, and the electrons migrate, together with $Na^+$, between the positive and negative electrodes, causing an oxidation reaction and a reduction reaction on the positive electrode and the negative electrode respectively. The sodium ions can reversibly migrate between the positive electrode and the negative electrode in the electrolyte solution. Both the positive electrode and the negative electrode are made of intercalation materials that allow sodium ions to be reversibly intercalated and deintercalated.

[Negative electrode plate]

The negative electrode plate includes a negative electrode current collector and a negative electrode film layer arranged on at least one surface of the negative electrode current collector, the negative electrode film layer includes a silicon-based negative electrode active material, and the silicon-based negative electrode active material is the silicon-based negative electrode active material of this application.

According to a first aspect, this application provides a silicon-based negative electrode active material, including

$M_2Si_2O_5$ and $M_2SiO_3$, where M includes one or more alkali metal elements; in an XRD diffraction pattern of the silicon-based negative electrode active material, a diffraction angle $2\theta$ has a first diffraction peak ranging from 24° to 25°, and a half-peak width of the first diffraction peak is $\beta_A$; the diffraction angle $2\theta$ has a second diffraction peak ranging from 26° to 27°, and a half-peak width of the second diffraction peak is $\beta_B$; and the silicon-based negative electrode active material satisfies $1.0 \leq \beta_A/\beta_B \leq 2.5$.

The silicon-based negative electrode active material based on the above solution not only has a high energy density, but also has good initial coulombic efficiency and/or cycle life. Although the mechanism is not very clear, the above performance improvement may be related to grain sizes and distribution of $M_2Si_2O_5$ grains and $M_2SiO_3$ grains in the silicon-based negative electrode active material. The half-peak width of an XRD diffraction peak has a function relationship of being negatively correlated with the grain size. It is found in this application that when the ratio of $\beta_A$ to $\beta_r$ ranges from (1.0 to 2.5):1, the $M_2Si_2O_5$ grains and the $M_2SiO_3$ grains have improved grain sizes and more uniform positional distribution in the silicon-based negative electrode active material. Such a microstructure helps to alleviate a volume expansion problem of the silicon-based negative electrode active material in a cycle process, thereby improving electrochemical performance of the silicon-based negative electrode active material. When the ratio of $\beta_A$ to $\beta_B$ ranges from (1.0 to 2.5):1, the $M_2Si_2O_5$ grains and the $M_2SiO_3$ grains show a mutually promoting synergistic effect, so that the silicon-based negative electrode active material has good cycle life. When the ratio of $\beta_A$ to $\beta_B$ is less than 1.0 or greater than 2.5, a size difference between the $M_2Si_2O_5$ grains and the $M_2SiO_3$ grains is large. This reflects uneven growth and distribution of the $M_2Si_2O_5$ grains and the $M_2SiO_3$ grains in the silicon-based negative electrode active material, resulting in poor electrochemical performance of the negative electrode active material.

In some embodiments, the ratio of $\beta_A$ to $\beta_B$ is $1.2 \leq \beta_A/\beta_B \leq 2.2$, and is optionally $1.3 \leq \beta_A/\beta_B \leq 2.0$. Based on this solution, the silicon-based negative electrode active material shows further improved cycle life.

In some embodiments, the ratio of $\beta_A$ to $\beta_B$ ranges from (1 to 1.3):1, (1.3 to 1.6):1, (1.6 to 1.9): 1, (1.9 to 2.2): 1, or (2.2 to 2.5):1. Based on this solution, the silicon-based negative electrode active material shows further improved cycle life.

In some embodiments, the ratio of $\beta_A$ to $\beta_B$ ranges from (1.2 to 2.2):1 (for example, (1.2 to 1.3):1, (1.3 to 1.4):1, (1.4 to 1.5):1, (1.5 to 1.6):1, (1.6 to 1.7):1, (1.7 to 1.8):1, (1.8 to 1.9):1, (1.9 to 2):1, (2 to 2.1):1, or (2.1 to 2.2):1). Based on this solution, the silicon-based negative electrode active material shows further improved cycle life.

In some embodiments, the ratio of $\beta_A$ to $\beta_B$ ranges from (1.5 to 1.8):1 (for example, (1.5 to 1.6):1, (1.6 to 1.7):1, or (1.7 to 1.8):1). Based on this solution, the silicon-based negative electrode active material shows further improved cycle life.

In some embodiments, $0.8° \leq \beta_A \leq 1.70°$, and optionally, $0.85° \leq \beta_A \leq 1.30°$. Based on this solution, the silicon-based negative electrode active material shows further improved cycle life.

In some embodiments, a value of $\beta_B$ is $0.40° \leq \beta_B \leq 1.15°$, and is optionally $0.50° \leq \beta_B \leq 0.95°$. Based on this solution, the silicon-based negative electrode active material shows further improved cycle life.

In some embodiments, a value of $\beta_A$ ranges from 1.20° to 1.70° (for example, 1.2° to 1.3°, 1.3° to 1.4°, 1.4° to 1.5°, 1.5° to 1.6°, or 1.6° to 1.7°), and optionally ranges from 1.35° to 1.54°. In this solution, the silicon-based negative electrode active material has further improved cycle life.

In some embodiments, a value of $\beta_B$ ranges from 0.67° to 1.15° (0.67° to 0.75°, 0.75° to 0.85°, 0.85° to 0.95°, 0.95° to 1.05°, or 1.05° to 1.15°), and optionally ranges from 0.70° to 1.14°. In this solution, the silicon-based negative electrode active material has further improved cycle life.

In some embodiments, a grain size of the $M_2Si_2O_5$ is smaller than a grain size of the $M_2SiO_3$. Based on this solution, the silicon-based negative electrode active material shows further improved cycle life.

In some embodiments, the grain size of the $M_2Si_2O_5$ ranges from 5 nm to 10 nm, and optionally ranges from 6 nm to 9 nm. Based on this solution, the silicon-based negative electrode active material shows further improved cycle life.

In some embodiments, the grain size of the $M_2SiO_3$ ranges from 6 nm to 20 nm, and optionally ranges from 11 nm to 18 nm. Based on this solution, the silicon-based negative electrode active material shows further improved cycle life.

In some embodiments, a grain size of $Li_2Si_2O_5$ grains ranges from 4.75 nm to 6.73 nm, for example, 4.75 nm to 4.82 nm, 4.82 nm to 4.9 nm, 4.9 nm to 5.25 nm, 5.25 nm to 5.39 nm, 5.39 nm to 5.77 nm, 5.77 nm to 5.98 nm, 5.98 nm to 6.21 nm, 6.21 nm to 6.57 nm, or 6.57 nm to 6.73 nm. The grain size is calculated based on the half-peak width of the XRD diffraction peak according to the Debye-Scherrer formula. The half-peak width is negatively correlated with the grain size. A larger half-peak width indicates a smaller grain size.

In some embodiments, a grain size of $Li_2SiO_3$ grains ranges from 6.99 nm to 12.00 nm, for example, 6.99 nm to 7.06 nm, 7.06 nm to 7.12 nm, 7.12 nm to 7.66 nm, 7.66 nm to 8.47 nm, 8.47 nm to 9.46 nm, 9.46 nm to 9.93 nm, 9.93 nm to 10.72 nm, 10.72 nm to 11.17 nm, or 11.17 nm to 12.00 nm. The grain size is calculated based on the half-peak width of the XRD diffraction peak according to the Debye-Scherrer formula. The half-peak width is negatively correlated with the grain size. A larger half-peak width indicates a smaller grain size.

In some embodiments, the silicon-based negative electrode active material further contains Si grains. The XRD pattern of the silicon-based negative electrode active material further has the following diffraction peak: (3) a third diffraction peak corresponding to a Si (111) crystal face, where a half-peak width of the third diffraction peak is $\beta_C$, and a

value of $\beta_C$ ranges from 0.5° to 2° (for example, 1.0° to 1.5°). In this solution, the silicon-based negative electrode active material has improved cycle life. In some embodiments, a diffraction angle 2θ of the third diffraction peak ranges from 28° to 29°.

In some embodiments, a peak intensity ratio of the first diffraction peak to the second diffraction peak ranges from (0.15 to 0.6):1. In this solution, the silicon-based negative electrode active material has improved cycle life.

In some embodiments, the XRD diffraction pattern of the silicon-based negative electrode active material further includes a third diffraction peak of the diffraction angle 2θ ranging from 28° to 29°, and a peak intensity ratio of the first diffraction peak to the third diffraction peak ranges from (0.2 to 0.6):1. In this solution, the silicon-based negative electrode active material has improved cycle life.

In some embodiments, the XRD diffraction pattern of the silicon-based negative electrode active material further includes the third diffraction peak of the diffraction angle 2θ ranging from 28° to 29°, and a peak intensity ratio of the second diffraction peak to the third diffraction peak ranges from (1 to 1.45):1. In this solution, the silicon-based negative electrode active material has improved cycle life.

In some embodiments, at least part of a surface of the silicon-oxygen composite has a coating layer; and optionally, the coating layer includes a carbon material. Based on this solution, the silicon-based negative electrode active material shows further improved cycle life.

In some embodiments, at least part of a surface (for example, the entire surface) of the silicon-based negative electrode active material is covered with a coating layer. Based on the above solution, the coating layer can coat free alkali metal (for example, free lithium) on a surface of an alkali-metalized product within the coating layer, to reduce free alkali metal on a surface of a finished product, thereby alleviating problems of gassing and gelation of the silicon-based negative electrode active material during pulping.

In some embodiments, a material of the coating layer includes one or more of a polymer, a carbon material, a metal material, and a metal compound. For example, the coating layer includes one or more of a polymer coating layer, a carbon coating layer, and a metal compound coating layer. Optionally, the polymer may include one or more of polyaniline, polyacetylene, polystyrene, polyacrylonitrile, polyvinyl chloride, and polyethylene. Optionally, the metal compound may include one or more of $Ti_5Si_3$, $Al_2O_3$, and $TiO_2$. The coating layer can further alleviate a volume expansion effect of the silicon-based negative electrode active material, thereby increasing the cycle life of the material. In addition, the coating layer further serves to protect the silicon-based negative electrode active material, inhibit a side reaction of the electrolyte solution on the surface of the material, and protect the surface of the material from being corroded by the electrolyte solution, so that the silicon-based negative electrode active material has a high capacity, thereby further improving the cycle life of the battery.

In some embodiments, the coating layer is a carbon material coating layer. In the above solution, the carbon material may include one or more of mesophase carbon microbeads (MCMB), hydrocarbon compound pyrolysis carbon, hard carbon, and soft carbon.

In some embodiments, a weight percentage of the carbon material in the silicon-based negative electrode active material may range from 1.5 wt% to 8 wt%. In this solution, the silicon-based negative electrode active material has further improved cycle life. If a content of the carbon material is excessively low, stability and integrity of the coating layer are insufficient, and thus the silicon-based negative electrode active material cannot be effectively isolated from the electrolyte solution. If the content of the carbon material is excessively high, initial coulombic efficiency is reduced.

In some embodiments, a specific surface area of the silicon-based negative electrode active material is 4 $m^2/g$ or less, and optionally ranges from 0.5 $m^2/g$ to 1.5 $m^2/g$. Based on this solution, the silicon-based negative electrode active material shows further improved cycle life.

In some embodiments, a BET specific surface area of the silicon-based negative electrode active material is 4 $m^2/g$ or less (for example, 1 $m^2/g$ to 2 $m^2/g$, 2 $m^2/g$ to 3 $m^2/g$, or 3 $m^2/g$ to 4 $m^2/g$). Based on this solution, the silicon-based negative electrode active material shows improved cycle life. The above solution effectively avoids low initial efficiency caused by excessive loss of active lithium during formation of an SEI film on the surface of the silicon-based negative electrode active material.

In some embodiments, a volume average particle size Dv50 of the silicon-based negative electrode active material ranges from 4 μm to 15 μm, and optionally ranges from 5 μm to 9 μm. Based on this solution, the silicon-based negative electrode active material shows further improved cycle life.

In some embodiments, the volume average particle size Dv50 of the silicon-based negative electrode active material ranges from 4 μm to 15 μm (for example, 4 μm to 5 μm, 5 μm to 6 μm, 6 μm to 7 μm, 7 μm to 8 μm, 8 μm to 9 μm, 9 μm to 10 μm, 10 μm to 11 μm, 11 μm to 12 μm, 12 μm to 13 μm, 13 μm to 14 μm, or 14 μm to 15 μm). Based on this solution, the silicon-based negative electrode active material shows improved cycle life. The silicon-based negative electrode active material according to the above solution has both good kinetics and initial coulombic efficiency.

In some embodiments, a particle size distribution (Dv90-Dv10)/Dv50 of the silicon-based negative electrode active material ranges from 0.5 to 3.0, and optionally ranges from 0.8 to 1.3. Based on this solution, the silicon-based negative electrode active material shows further improved cycle life.

In some embodiments, a ratio (Dv90-Dv10)/Dv50 of the silicon-based negative electrode active material ranges from (0.5 to 3.0):1 (for example, (0.5 to 1):1, (1 to 1.5):1, (1.5 to 2):1, (2 to 2.5): 1, or (2.5 to 3):1). Based on this solution, the silicon-based negative electrode active material shows improved cycle life, especially improved kinetic properties.

In some embodiments, free alkali metal elements account for 1 wt% or less of a total content of alkali metal elements in the silicon-based negative electrode active material, and optionally account for 0.5 wt% or less. Based on this solution, the silicon-based negative electrode active material shows further improved cycle life.

In some embodiments, a content of Si in the silicon-based negative electrode active material ranges from 20 wt% to 80 wt%, and optionally ranges from 30 wt% to 60 wt%. Based on this solution, the silicon-based negative electrode active material shows further improved cycle life.

In some embodiments, the content of Si in the silicon-based negative electrode active material ranges from 20 wt% to 80 wt% (for example, 20 wt% to 30 wt%, 30 wt% to 40 wt%, 40 wt% to 50 wt%, 50 wt% to 60 wt%, 60 wt% to 70 wt%, or 70 wt% to 80 wt%). Based on this solution, the silicon-based negative electrode active material shows improved cycle life.

In some embodiments, the total content of alkali metal elements in the silicon-based negative electrode active material ranges from 2 wt% to 14 wt%, and optionally ranges from 2 wt% to 10 wt%. Based on this solution, the silicon-based negative electrode active material shows further improved cycle life.

In some embodiments, the content of alkali metal elements in the silicon-based negative electrode active material ranges from 2 wt% to 14 wt% (for example, 2% to 3%, 3% to 4%, 4% to 5%, 5% to 6%, 6% to 7%, 7% to 8%, 8% to 9%, 9% to 10%, 10% to 11%, 11% to 12%, 12% to 13%, or 13% to 14%). Based on this solution, silicon-based negative electrode active materials show improved initial coulombic efficiency.

In some embodiments, a Si:O molar ratio of the silicon-based negative electrode active material ranges from 1:(0.6 to 1):1.8, and optionally ranges from 1:(0.9 to 1):1.5.

In some embodiments, the Si:O molar ratio of the silicon-based negative electrode active material is 1:(0.6 to 1.8) (for example, 1:(0.6 to 0.8), 1:(0.8 to 1), 1:(1 to 1.2), 1:(1.2 to 1.4), 1:(1.4 to 1.6), or 1:(1.6 to 1.8)). Based on this solution, the silicon-based negative electrode active material shows improved cycle life.

In some embodiments, M includes at least one of Li, Na, and K. Based on this solution, the silicon-based negative electrode active material shows further improved cycle life.

In some embodiments, M includes Li. Based on this solution, the silicon-based negative electrode active material shows further improved cycle life.

In some embodiments, an initial lithium deintercalation capacity of the silicon-based negative electrode active material is 1300 mAh/g or more.

In some embodiments, the initial coulombic efficiency of the silicon-based negative electrode active material is 74% or more.

According to a second aspect, this application provides a preparation method for the above silicon-based negative electrode active material, including the following steps:

> providing a raw material containing Si and O;
> heating the raw material by using a vapor deposition technique to form vapor, and cooling a deposit formed by the vapor;
> crushing the deposit to obtain a crushed product; and
> mixing the crushed product and an alkali metal source in a mass ratio of 100:(6 to 11), heating the mixture to 450°C to 800°C at a heating rate of 5°C/min or less, and keeping the temperature for 3 h to 10 h to obtain the silicon-based negative electrode active material.

In the above solution, the crushed product and the alkali metal source are mixed, heated to the specific target temperature at the specific heating rate, and kept warm for the specific time. This is conducive to obtaining the silicon-based negative electrode active material of this application. Generally, a greater heating rate indicates a greater half-peak width. A higher heat treatment temperature and a longer heat treatment time indicate a smaller half-peak width. Those skilled in the art can obtain the silicon-based negative electrode active material of this application through limited tests within the above parameter ranges. Based on this solution, the prepared silicon-based negative electrode active material shows improved energy density, initial coulombic efficiency, and/or cycle life. The reaction temperature of 450°C to 800°C is favorable. If the temperature is excessively low, pre-lithiation reaction efficiency is low, and thus some lithium sources are lost, causing unnecessary waste. Moreover, a material obtained through pre-lithiation contains excessive impurities, which not only fails to improve the initial efficiency, but also causes a large loss of capacity. If the temperature is excessively high, grains inside the particles grow, and an excessively large grain size is not conducive to recycling of the material. A heating rate of 5°C/min or less is favorable, and controlling the heating rate can reduce a reaction rate of pre-lithiation, and prevent a local reaction from being excessively violent to cause an excessively large size of local grains inside the material and affect recycling of the material. It is favorable to keep the temperature for 3 h to 10 h. The holding time allows a lithium source and a silicon oxide precursor to react more evenly and thoroughly, thereby reducing an amount of free lithium.

In the above embodiment, the specific mass ratio 100:(6 to 11) of the crushed product to the alkali metal source, the specific heating rate (5°C/min or less), the specific target temperature (450°C to 800°C), and the specific holding time (3 h to 10 h) are conducive to obtaining the silicon-based negative electrode active material with the ratio of the half-peak width $\beta_A$ of the first diffraction peak to the half-peak width $\beta_B$ of the second diffraction peak being $1.0 \leq \beta_A/\beta_B \leq 2.5$.

In the above embodiment, the specific mass ratio 100:(8 to 10) of the crushed product to the alkali metal source, the specific heating rate (3°C/min to 5°C/min), the specific target temperature (500°C to 600°C), and the specific holding time (8 h to 10 h) are conducive to obtaining the silicon-based negative electrode active material with the ratio of the half-peak width $\beta_A$ of the first diffraction peak to the half-peak width $\beta_B$ of the second diffraction peak being $1.0 \leq \beta_A/\beta_B \leq 2.5$.

In some embodiments, the raw material includes elemental silicon and silicon dioxide.

In some embodiments, the elemental silicon and the silicon dioxide can be heated to form a $SiO_x$ gas containing Si and O, and the $SiO_x$ gas is further deposited to obtain a $SiO_x$ silicon-based negative electrode active material. The elemental silicon may be metallic silicon (or referred to as industrial silicon), polycrystalline silicon, or monocrystalline silicon that is commonly used in the art. A purity of the elemental silicon may be 99.9% or more, 99.99% or more, or 99.999% or more.

In some embodiments, when vapor deposition is performed, a target temperature for heating ranges from 1100°C to 1500°C. In the above solution, the raw materials can be gasified at the same time to generate a mixed silicon-oxygen vapor with uniform components, and the silicon element and the oxygen element are uniformly distributed inside the material obtained through deposition. It is conducive to obtaining the silicon-based negative electrode active material with the ratio of $\beta_A$ to $\beta_B$ ranging from (1.0 to 2.5):1.

In some embodiments, when vapor deposition is performed, a target temperature for cooling ranges from 700°C to 900°C. In the above solution, the silicon-based negative electrode active material has a good crystallite size and appropriate crystallinity, so that the silicon-based negative electrode active material has high initial coulombic efficiency and cycle performance.

In some embodiments, vapor deposition is performed in an environment with an absolute pressure of 40 Pa or less. Based on this solution, vapor can be formed quickly in the step of vapor deposition.

In some of the above solutions, the operation of crushing the deposit includes: performing, according to preset parameters such as the volume average particle size (Dv50) and the specific surface area of the product, coarse crushing-fine crushing-classification operations on the deposit to obtain the product that meets the preset parameters. In some embodiments, crushing and classification processing can be performed on the deposit by using any method and device known in the art, such as a grinder or a jet mill and classifier.

In some embodiments, in a step of a lithiation reaction, the crushed product and the alkali metal source are mixed in a mass ratio ranging from 100:(6 to 11) (for example, 100:(6 to 7), 100:(7 to 8), 100:(8 to 9), 100:(9 to 10), or 100:(10 to 11)).

In some embodiments, a heating rate of the lithiation reaction ranges from 0.5°C/min to 1.5°C/min, 1°C/min to 2°C/min, 1.5°C/min to 2.5°C/min, 2°C/min to 3°C/min, 2.5°C/min to 3.5°C/min, 3°C/min to 4°C/min, 3.5°C/min to 4.5°C/min, or 4°C/min to 5°C/min.

In some embodiments, a heating temperature of the lithiation reaction ranges from 450°C/min to 500°C/min, 500°C/min to 550°C/min, 550°C/min to 600°C/min, 600°C/min to 650°C/min, 650°C/min to 700°C/min, 700°C/min to 750°C/min, or 750°C/min to 800°C/min.

In some embodiments, a holding time for the lithiation reaction ranges from 3 h to 4 h, 4 h to 5 h, 5 h to 6 h, 6 h to 7 h, 7 h to 8 h, 8 h to 9 h, or 9 h to 10 h.

In some embodiments, in the operation of reacting the crushed product with the alkali metal source, the alkali metal source may be a lithium source or a sodium source. The lithium source may be one or more of metallic lithium, lithium hydroxide, lithium carbonate, lithium nitrate, lithium amide, and lithium hydride. The sodium source may be one or more of metallic sodium, sodium hydroxide, sodium carbonate, sodium nitrate, sodium amide, and sodium hydride.

In some embodiments, an alkali metallization reaction temperature ranging from 450°C to 800°C is conducive to obtaining an appropriate degree of alkali metallization for the silicon-based negative electrode active material, so that the silicon-based negative electrode active material has high initial coulombic efficiency and cycle performance. When the temperature is lower than 500°C, the degree of alkali metallization of the material may not be sufficient, which affects the initial coulombic efficiency of the material. When the temperature is higher than 800°C, the material may have an excessively large grain size, which affects cycle performance of the material.

In some embodiments, the preparation method for the silicon-based negative electrode active material further includes the following step: performing coating treatment on the silicon-based negative electrode active material, where optionally, the coating treatment is carbon material coating treatment; and further optionally, the carbon material coating treatment includes the following operations: placing the silicon-based negative electrode active material in a chamber containing a carbon source gas, heating the silicon-based negative electrode active material to 700°C to 1000°C, and keeping the temperature for 1 h to 6 h

In some embodiments, the surface of the silicon-based negative electrode active material is coated by using a liquid phase coating method, to form the coating layer. For example, a polymer is dissolved in a specific solvent and is fully stirred and uniformly mixed with the silicon-based negative electrode active material particles, and then the solvent is removed by evaporation, so that the polymer is uniformly coated on the surfaces of the silicon-based negative electrode active material particles.

In some embodiments, the surface of the silicon-based negative electrode active material is coated by using a chemical vapor deposition method, to form the coating layer. For example, a carbon source gas (for example, a hydrocarbon compound gas) is introduced into a reaction furnace filled with the silicon-based negative electrode active material, and heat treatment is performed to carbonize the carbon source gas to form a coating layer covering the surface of the silicon-based negative electrode active material, thereby obtaining the silicon-based negative electrode active material with the coating layer on the surface.

In some embodiments, the coating treatment includes carbon coating treatment. Optionally, the carbon coating treatment includes the following operations: placing a lithiated product in a chamber containing a carbon source gas, heating the lithiated product to 700°C to 1000°C, and keeping the temperature for 1 h to 6 h.

In some embodiments, the coating treatment includes carbon coating treatment. Optionally, the carbon coating treatment includes the following operations: placing a lithiated product in a chamber containing a carbon source gas, heating the lithiated product to 800°C to 900°C, and keeping the temperature for 2 h to 5 h.

In some embodiments, the selected carbon source gas includes one or more of the following: acetylene, methane, ethylene, propane, ethane, propylene, propyne, and toluene.

According to a third aspect, this application provides a secondary battery, including a negative electrode, where the negative electrode includes the above silicon-based negative electrode active material.

According to a fourth aspect, this application provides a power consuming apparatus, including the above secondary battery.

For example, a negative electrode current collector has two opposite surfaces in a thickness direction thereof, and a negative electrode film layer is arranged on either or both of the two opposite surfaces of the negative electrode current collector.

In some embodiments, the negative electrode current collector may be a metal foil or a composite current collector. For example, a copper foil may be used as a metal foil. The composite current collector may include a polymer material substrate and a metal layer formed on at least one surface of the polymer material substrate. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode film layer optionally includes a binder. For example, the binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the negative electrode film layer optionally includes another additive such as a thickener (for example, sodium carboxymethyl cellulose (CMC-Na)).

In some embodiments, the negative electrode plate may be prepared as follows: dispersing the above components for preparing the negative electrode plate, for example, the silicon-based negative electrode active material, the conductive agent, the binder, and any other components, into a solvent (for example, deionized water) to form a negative electrode slurry; and coating the negative electrode slurry on the negative electrode current collector, followed by procedures such as drying and cold pressing, to obtain the negative electrode plate.

[Positive electrode plate]

In some embodiments, the positive electrode plate generally includes a positive electrode current collector and a positive electrode film layer arranged on at least one surface of the positive electrode current collector, and the positive electrode film layer includes a positive electrode active material.

For example, the positive electrode current collector has two opposite surfaces in a thickness direction thereof, and the positive electrode film layer is arranged on either or both of the two opposite surfaces of the positive electrode current collector.

In some embodiments, the positive electrode current collector may be a metal foil or a composite current collector. For example, an aluminum foil may be used as a metal foil. The composite current collector may include a polymer material substrate and a metal layer formed on at least one surface of the polymer material substrate. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode film layer optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorine-containing acrylic resin.

In some embodiments, the positive electrode film layer optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared as follows: dispersing the above components for preparing the positive electrode plate, for example, the positive electrode active material, the conductive agent, the binder, and any other components, in a solvent (for example, N-methylpyrrolidone) to form a positive electrode slurry; and coating the positive electrode slurry on a positive electrode current collector, followed by procedures such as drying and cold pressing, to obtain the positive electrode plate.

[Positive electrode active material]

In some embodiments, the positive electrode active material may be a well-known positive electrode active material used for a secondary battery in the art.

For example, the positive electrode active material may include at least one of the following materials: lithium-containing phosphate of an olivine structure, lithium transition metal oxide, and their respective modified compounds. However, this application is not limited to such materials, and may alternatively use other conventional materials that can be used as positive electrode active materials for batteries. These positive electrode active materials may be used alone or in combination with two or more. Examples of lithium transition metal oxide may include, but are not limited to, at least one of lithium-cobalt oxide (for example, $LiCoO_2$), lithium-nickel oxide (for example, $LiNiO_2$), lithium-manganese oxide (for example, $LiMnO_2$ or $LiMn_2O_4$), lithium-nickel-cobalt oxide, lithium-manganese-cobalt oxide, lithium-nickel-manganese oxide, lithium-nickel-cobalt-manganese oxide (for example, $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$)), lithium-nickel-cobalt-aluminum oxide (for example, $LiNi_{0.85}Co_{0.15}Al_{0.05}O_2$), and a modified compound thereof. Examples of lithium-containing phosphate of the olivine structure may include, but are not limited to, at least one of lithium iron phosphate (for example, $LiFePO_4$ (also abbreviated as LFP)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

[Electrolyte]

The electrolyte plays a role in conducting ions between the positive electrode plate and negative electrode plate. A type of the electrolyte is not specifically limited in this application, and may be selected as required. For example, the electrolyte may be liquid, gelled, or all solid.

In some embodiments, the electrolyte is liquid and includes an electrolyte salt and a solvent.

In some embodiments, the electrolyte salt is selected from sodium perchlorate, sodium hexafluorophosphate, sodium tetrafluoroborate, and sodium hexafluoroarsenate.

In some embodiments, the solvent may be at least one selected from ethyl carbonate, propyl carbonate, ethyl methyl carbonate, diethyl carbonate, dimethyl carbonate, dipropyl carbonate, methyl propyl carbonate, ethylene propyl carbonate, butyl carbonate, fluoro ethyl carbonate, methyl formate, methyl acetate, ethyl acetate, propyl acetate, methyl propionate, ethyl propionate, propyl propanoate, methyl butyrate, ethyl butyrate, 1,4-butyrolactone, sulfolane, dimethyl sulfone, methyl ethyl sulfone, and diethyl sulfone.

In some embodiments, the electrolyte solution optionally includes an additive. For example, additives may include a negative electrode film forming additive and a positive electrode film forming additive, and may further include additives that can improve some performance of the battery, such as an additive that improves overcharge performance of the battery, and an additive that improves battery performance at a high temperature or low temperature.

[Separator]

In some embodiments, the secondary battery further includes a separator. A type of the separator is not particularly limited in this application, and any well-known porous structure separator with good chemical stability and mechanical stability can be selected.

In some embodiments, a material of the separator may include at least one of glass fiber, non-woven fabric, polyethylene, polypropylene, and polyvinylidene fluoride. The separator may be a single-layer film or a multilayer composite film without special limitations. When the separator is a multilayer composite film, materials of the layers may be the same or different without special limitations.

In some embodiments, an electrode assembly may be formed by a positive electrode plate, a negative electrode plate, and a separator through a winding process or a laminating process.

In some embodiments, the secondary battery may include an outer packaging. The outer packaging can be used to encapsulate the above electrode assembly and electrolyte.

In some embodiments, the outer packaging of the secondary battery may be a hard shell such as a hard plastic shell, an aluminum shell, or a steel shell. The outer packaging of the secondary battery may alternatively be a soft package such as a pouch-type soft package. A material of the soft package may be plastic, and examples of plastic may include polypropylene, polybutylene terephthalate, polybutylene succinate, and the like.

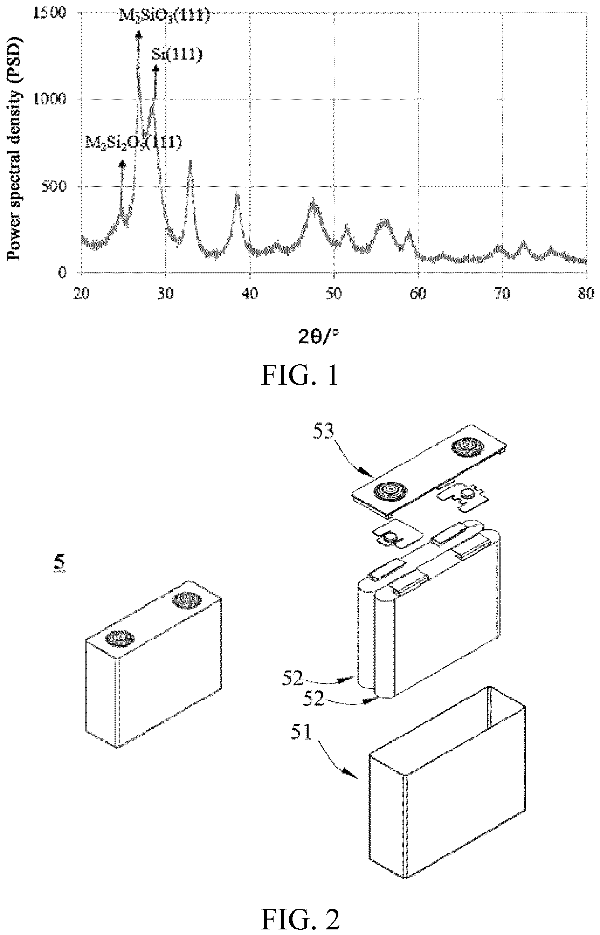

A shape of the secondary battery is not particularly limited in this application, and the secondary battery may be cylindrical, prismatic, or of any other shape. FIG. 2 shows a secondary battery 5 as an example.

In some embodiments, referring to an exploded view of the secondary battery 5 shown in FIG. 2, an outer packaging of the secondary battery 5 may include a housing 51 and a cover plate 53. The housing 51 may include a bottom plate and a side plate connected to the bottom plate, and an accommodating cavity is enclosed by the bottom plate and the side plate. The housing 51 has an opening in communication with the accommodating cavity, and the cover plate 53 may cover the opening to close the accommodating cavity. An electrode assembly 52 may be formed by a positive electrode plate, a negative electrode plate, and a separator through a winding process or a laminating process. The electrode assembly 52 is packaged in the accommodating cavity. An electrolyte solution infiltrates into the electrode assembly 52. The secondary battery 5 may include one or more electrode assemblies 52, and those skilled in the art may make choices according to actual requirements.

In some embodiments, the secondary battery may be assembled into a battery module. The battery module may include one or more secondary batteries, and a specific quantity may be selected by those skilled in the art based on application and capacity of the battery module.

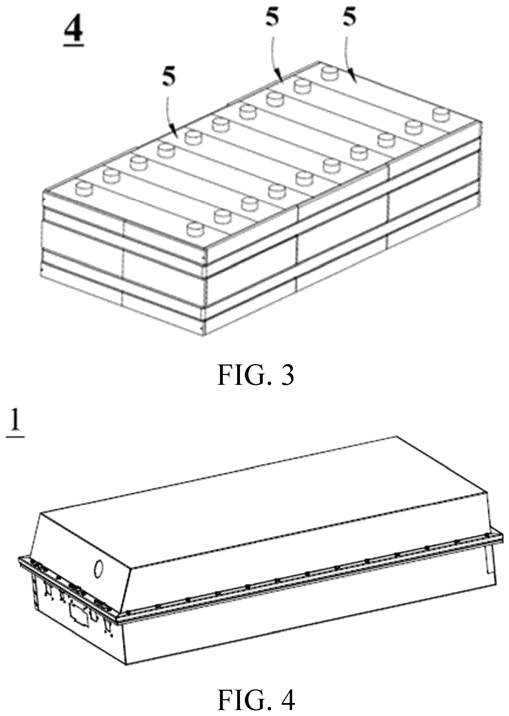

FIG. 3 shows a battery module 4 as an example. Referring to FIG. 3, in the battery module 4, a plurality of secondary batteries 5 may be arranged sequentially in a length direction of the battery module 4. Certainly, the secondary batteries may alternatively be arranged in any other manner. The plurality of secondary batteries 5 may further be secured by fasteners.

Optionally, the battery module 4 may further include an outer shell with an accommodating space, and the plurality of secondary batteries 5 are accommodated in the accommodating space.

In some embodiments, the battery module may alternatively be assembled into a battery pack. The battery pack may include one or more battery modules, and a specific quantity may be selected by those skilled in the art based on application and capacity of the battery pack.

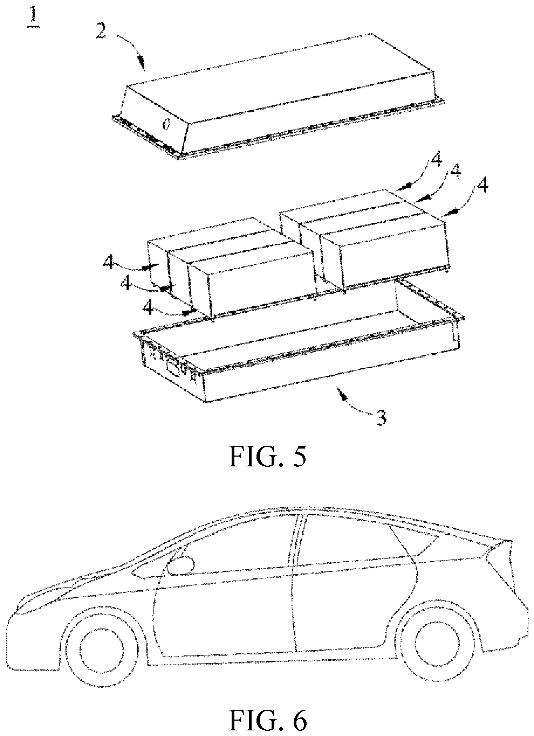

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form a closed space for accommodating the battery modules 4. The plurality of battery modules 4 may be arranged in the battery box in any manner.

In addition, this application further provides a power consuming apparatus. The power consuming apparatus includes at least one of the secondary battery, the battery module, or the battery pack provided in this application. The secondary battery, the battery module, or the battery pack may be used as a power source of the power consuming apparatus, and may also be used as an energy storage unit of the power consuming apparatus. The power consuming apparatus may include, but is not limited to, a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

The secondary battery, the battery module, or the battery pack may be selected according to use requirements of the power consuming apparatus.

FIG. 6 show a power consuming apparatus as an example. The power consuming apparatus is a pure electric vehicle, a hybrid electric vehicle, a plug-in hybrid electric vehicle, or the like. To meet requirements of the power consuming apparatus for high power and high energy density of the secondary battery, the battery pack or the battery module may be used.

Examples of this application are described below. The examples described below are illustrative, are merely used to explain this application, and should not be construed as a limitation to this application. Where specific techniques or conditions are not specified in the examples, the techniques or conditions described in the literatures of the art or the product specifications are followed. Where no manufacturer is indicated for the reagents or instruments used, they are conventional products that can be commercially obtained.

## 1. Preparation method for a silicon-based negative electrode active material

In the following detailed embodiments, the preparation method for a silicon-based negative electrode active material is described in detail as follows:

(1) A raw material composition was provided according to a composition of a target product, where the raw material composition includes elemental silicon (metallic silicon) and silicon dioxide ($SiO_2$) with a mass ratio of 35:65.
(2) The raw material composition was heated to 1340°C by using a vapor deposition technique in a helium atmosphere with an absolute pressure of 20 Pa to form vapor, and then the vapor was cooled to 800°C to form a deposit.
(3) The deposit was collected and crushed into a powder product.
(4) The powder product was mixed with a lithium source (LiOH) in 100:y (mass ratio), the mixture was heated at a preset heating rate from room temperature to a reaction temperature under a nitrogen atmosphere, and the temperature was kept for a lithiation reaction, to obtain a lithiated product (where a value of y, the heating rate of the lithiation reaction, the reaction temperature, and a holding time are shown in Table 1).
(5) The lithiated product was placed in a reaction chamber of a vapor deposition device, and a mixture of a carbon source gas (acetylene) and a protective gas (nitrogen) was introduced into the reaction chamber with a proportion of acetylene being 20 vol% and a proportion of nitrogen being 80 vol%. The mixture was heated to 800°C and maintained for 2 h, so that the carbon source gas was pyrolytically deposited on a surface of the lithiated product to form a carbon material coating layer, to obtain a carbon-coated product. The carbon-coated product was used as a silicon-based negative electrode active material in subsequent steps.

According to the above method, a plurality of silicon-based negative electrode active material samples (referred to as samples below) were prepared. These samples have different characteristic parameters shown in Table 1:

(1) An XRD pattern of the sample has a first diffraction peak (ranging from 24° to 25°) corresponding to an $M_2Si_2O_5$ (111) crystal face (M being Li). A half-peak width of the first diffraction peak is $\beta_A°$, an intensity is $I_A$, and a corresponding grain size of the $M_2Si_2O_5$ grain is $D_A$.
(2) The XRD pattern of the sample has a second diffraction peak (ranging from 26° to 27°) corresponding to an $M_2SiO_3$ (111) crystal face (M being Li). A half-peak width of the second diffraction peak is $\beta_B°$, an intensity is $I_B$, and a corresponding grain size of the $M_2SiO_3$ grain is $D_B$.

In addition to the above characteristic parameters, other parameters of these samples are basically the same, and the same parameters are as follows:

(a) the silicon-based negative electrode active material has a carbon coating layer content of 3.6±0.1 wt%, and the balance is the silicon-based negative electrode active material;
(b) the silicon-based negative electrode active material has a lithium element content of 7.5±1%;
(c) the silicon-based negative electrode active material has a Si content of 51.5±1%;
(d) x in the silicon-based negative electrode active material M-$SiO_x$ is 1.3±0.1;
(e) the silicon-based negative electrode active material has a BET specific surface area of 1.3±0.05 $m^2/g$;
(f) the silicon-based negative electrode active material has a volume average particle size Dv50 of 6.2±1 $\mu$m;
(g) the silicon-based negative electrode active material has a ratio (Dv90-Dv10)/Dv50 of 1.05±0.05;
(h) the XRD pattern of the sample has a third diffraction peak (ranging from 28° to 29°) corresponding to a Si (111) crystal face. A half-peak width $\beta_C$ of the third diffraction peak is 1.01±0.01°, and a corresponding grain size $D_C$ of the Si grain is 8±0.1 nm; and
(i) a peak intensity $I_C$ value of the third diffraction peak is set to 100, so that a peak intensity ratio of the first diffraction peak to the second diffraction peak to the third diffraction peak ranges from $I_A:I_B:I_C$ = (40 to 60):(100 to 145):100.

FIG. 1 shows an XRD pattern of a typical silicon-based negative electrode active material. The figure shows the first diffraction peak (ranging from 24° to 25°) corresponding to the $M_2Si_2O_5$ (111) crystal face (M being Li), the second diffraction peak (ranging from 26° to 27°) corresponding to the $M_2SiO_3$ (111) crystal face (M being Li), and the third diffraction peak (ranging from 28° to 29°) corresponding to the Si (111) crystal face.
Next, the above silicon-based negative electrode active material was assembled into a button battery, and electrochemical performance analysis was performed.

2. Analysis and detection method

2.1 Half-peak width and grain size

The half-peak width and the grain size have meanings well-known in the art, and can be tested by using a method known in the art. For example, an XRD pattern of a sample can be tested according to the JIS/K0131-1996 test standard, a corresponding diffraction peak of a target crystal is positioned according to the XRD pattern of the sample, and a half-peak width and a peak height are determined based on the diffraction peak.

The half-peak width is a peak width at half a height of an XRD diffraction peak. That is, a straight line parallel to a bottom of the peak is made through a midpoint of the peak height, and a distance, in °, between two points where the straight line intersects with two sides of the peak is the half-peak width.

The peak height is a peak height (peak ordinate) of the diffraction peak. When an alkali metal element includes Li, standard card data with a PDF number of 00-024-0651 may be used to identify a first diffraction peak corresponding to a $Li_2Si_2O_5$ grain (111) crystal face, where a diffraction angle $2\theta$ of the first diffraction peak ranges from 24° to 25°. Standard card data with a PDF number of 00-029-0828 may be used to identify a second diffraction peak corresponding to a $Li_2SiO_3$ grain (111) crystal face, where a diffraction angle $2\theta$ of the second diffraction peak ranges from 26° to 27°.

When an alkali metal element includes Na, standard card data with a PDF number of 00-019-1237 may be used to identify a first diffraction peak corresponding to a $Na_2Si_2O_5$ grain (111) crystal face, where a diffraction angle $2\theta$ of the first diffraction peak ranges from 23° to 24°. Standard card data with a PDF number of 00-016-0818 may be used to identify a second diffraction peak corresponding to a $Na_2SiO_3$ grain (111) crystal face, where a diffraction angle $2\theta$ of the second diffraction peak ranges from 29° to 30°.

Standard card data with a PDF number of 00-027-1402 may be used to identify a third diffraction peak corresponding to a Si grain (111) crystal face, where a diffraction angle $2\theta$ of the third diffraction peak ranges from 28° to 29°.

Calculation of a grain size: A half-peak width $\beta$ and a diffraction angle $\theta$ of the diffraction peak of each of the $Li_2Si_2O_5$ (111) crystal face and the $Li_2SiO_3$ (111) crystal face are respectively measured, and substituted into a Debye-Scherrer formula for calculation, to obtain a corresponding grain size.

The Debye-Scherrer formula is as follows:

$$D_{hkl} = k\lambda/\beta\cos\theta$$

$D_{hkl}$--grain size, unit: nm; k--Scherrer constant, k = 0.89; and $\lambda$--incident X-ray wavelength, $\lambda$ = 0.15406 nm. $\beta$--half-peak width of the diffraction peak, unit: °; and $\theta$--diffraction angle, unit: degree.

The grain size is calculated based on the half-peak width of the XRD diffraction peak. The half-peak width is negatively correlated with the grain size. A larger half-peak width indicates a smaller grain size.

Test results of the above parameters are shown in Table 1.

2.2 Test of contents of alkali metal elements and the silicon element

A content of an element has a meaning well-known in the art, and can be tested by using a method known in the art. For example, the contents of the alkali metal elements and the silicon element can be determined through an inductively coupled plasma (ICP) test. Specifically, a to-be-tested sample is taken and digested with aqua regia and hydrofluoric acid HF, and a solution obtained through the digestion is taken to test contents of total alkali metal elements (for example, the lithium element) and the silicon element.

2.3 Test of a content of free alkali metal

The content of the free alkali metal has a well-known meaning in the art, and can be tested by using a method known in the art. For example, according to the GB/T9725-2007 test standard, deionized water is used to dissolve the free alkali metal on a surface of the to-be-tested sample, alkali metal carbonate (for example, lithium carbonate) and alkali metal hydroxide (for example, lithium hydroxide) in a filtrate are titrated by using an acid-base titration method (hydrochloric acid standard solution), and then the content of the free alkali metal in the material is calculated.

A percentage of free alkali metal/total alkali metal = a mass of free alkali metal/a mass of total alkali metal × 100%.

When the alkali metal is lithium, a percentage of free lithium/total lithium = a mass of free lithium/a mass of total lithium × 100%.

Calculation results are shown in Table 1.

2.4 Test of a BET specific surface area

The specific surface area of the silicon-based negative electrode active material has a meaning well-known in the art, and can be tested by using a method known in the art. For example, with reference to GB/T 19587-2017, a method of a nitrogen adsorption specific surface area analysis test may be used for testing, and a BET (Brunauer Emmett Teller) method is used for calculation, where the nitrogen adsorption specific surface area analysis test can be implemented with a Tri-Star 3020 type specific surface area analysis tester available from Micromeritics company, the United States.

2.5 Test of a particle size

Dv10, Dv50, and Dv90 of the silicon-based negative electrode active material have meanings well-known in the art, and can be tested by using a method known in the art. For example, a laser particle size analyzer (for example, Malvern Master Size 3000) may be used for the determination according to the standard GB/T 19077-2016.
Physical definitions of Dv10, Dv50, and Dv90 are as follows: corresponding particle sizes that are obtained when a cumulative volume distribution percentage of the silicon-based negative electrode active material reaches 10%, 50%, and 90%.

2.6 Initial coulombic efficiency

(1) Preparation of a button battery

Preparation of a negative electrode plate: The above prepared silicon-based negative electrode active material, a conductive agent Super-P (conductive carbon black), and a binder PAA (polyacrylic acid) were fully stirred and mixed in a mass ratio of 85:5:10 in a proper amount of deionized water, to form a uniform negative electrode slurry; and the negative electrode slurry was coated on a surface of a negative electrode current collector copper foil, dried, and cold pressed, to obtain the negative electrode plate.

Counter electrode: a metallic lithium plate.
Separator: a polyethylene (PE) film.

Preparation of an electrolyte solution: Ethylene carbonate (EC), ethyl methyl carbonate (EMC), and diethyl carbonate (DEC) were mixed in a volume ratio of 1:1:1, $LiPF_6$ was uniformly dissolved in the above solution to obtain the electrolyte solution, and then fluoroethylene carbonate (FEC) was added, where a concentration of $LiPF_6$ is 1 mol/L, and a mass percentage of the FEC in the electrolyte solution is 6%.
Assembly of the button battery: The negative electrode plate, the separator, and the counter electrode, namely, the metallic lithium plate were sequentially stacked, and the electrolyte solution was added, to obtain the button battery.

(2) Initial coulombic efficiency test

At room temperature, the battery was left standing for 3 h, and then discharged at a constant current of 0.05 C to a voltage of 0.005 V, and further discharged at a constant current of 50 $\mu$A to the voltage of 0.005 V. A capacity at this time was recorded as an initial lithium intercalation capacity ($C_2$). The battery was left standing for 5 minutes, and then charged to a voltage of 2 V at a rate of 0.1 C. A capacity at this time was recorded as an initial lithium deintercalation capacity ($C_1$).

Initial efficiency (%) of the material = (initial lithium deintercalation capacity $C_1$/initial lithium intercalation capacity $C_2$ * 100%

Test results of the above parameters are shown in Table 1.

2.8 Test of a cycle life of a material

(1) Preparation of a full battery

1. Preparation of a positive electrode plate

A positive electrode active material $LiNi_{1/3}Co_{1/3}Mn_{1/3}O_2$ (NCM333), conductive carbon black, and a binder polyvinylidene fluoride (PVDF) were fully stirred and mixed in a weight ratio of 93:2:5 in a proper amount of N-methylpyrrolidone (NMP) solvent, to form a uniform positive electrode slurry; and the positive electrode slurry was coated on a surface of a positive electrode current collector, followed by procedures such as drying, to obtain the positive electrode plate.

2. Preparation of a negative electrode plate

A silicon-based negative electrode active material (silicon-oxygen composite material), conductive carbon black, a sodium carboxymethyl cellulose (CMC) as a thickener, and a styrene-butadiene rubber (SBR) binder were fully stirred and mixed in a weight ratio of 96.5:1.0:1.0:1.5 in a proper amount of deionized water, to form a uniform negative electrode slurry; and the negative electrode slurry was coated on a negative electrode current collector, followed by procedures such as drying, to obtain the negative electrode plate.

3. Preparation of an electrolyte solution

Ethylene carbonate (EC), ethyl methyl carbonate (EMC), and diethyl carbonate (DEC) were mixed in a volume ratio of 1:1:1 to obtain an organic solvent, and then fully dried lithium salt $LiPF_6$ was dissolved in the mixed organic solvent to prepare an electrolyte solution with a concentration of 1 mol/L.

4. Preparation of a full battery

The positive electrode plate, a separator (PP/PE/PP composite film), and the negative electrode plate were sequentially stacked, wound into a battery cell, and placed in a packaging outer shell. The above electrolyte solution was injected into the battery cell, followed by procedures such as sealing, standing, hot and cold pressing, and formation, to obtain a full secondary battery.

(2) Test of cycle performance at 25°C

At 25°C, the secondary battery prepared in each of the examples and comparative examples was charged at a constant current of 0.5 C to a charge cut-off voltage of 4.2 V, charged at a constant voltage of 4.2 V until the current reaches 0.05 C and left standing for 5 min, and discharged at a constant current of 0.5 C to a discharge cut-off voltage of 2.8 V and left standing for 5 min. This was a charge-discharge cycle. According to this method, a cyclic charge and discharge test was performed on the battery until a battery capacity retention rate decayed to 80%. The number of cycles in this case is the cycle life of the battery at 25°C.

(3) Test of cycle performance at 45°C

At 45°C, the secondary battery prepared in each of the examples and comparative examples was charged at a constant current of 1 C to a charge cut-off voltage of 4.2 V, charged at a constant voltage of 4.2 V until the current reaches 0.05 C and left standing for 5 min, and discharged at a constant current of 1 C to a discharge cut-off voltage of 2.8 V and left standing for 5 min. This was a charge-discharge cycle. According to this method, a cyclic charge and discharge test was performed on the battery until a battery capacity retention rate decayed to 80%. The number of cycles in this case is the cycle life of the battery at 45°C.

Test results of the above parameters are shown in Table 1.

Table 1

| | Lithiation reaction | | | | Li$_2$Si$_2$O$_5$ | | Li$_2$SiO$_3$ | | Half-peak width ratio | Battery performance | | |
|---|---|---|---|---|---|---|---|---|---|---|---|---|
| | Addition amount of a lithium source y | Heating rate °C/min | Reaction temperature °C | Holding time h | $\beta_A$ /° | $D_A$ /nm | $\beta_B$ /° | $D_B$ /nm | $\beta_A/\beta_B$ | Initial efficiency % | 25°C cycling /circle | 45°C cycling /circle |
| E1 | 9 | 3 | 750 | 8 | 1.20 | 6.73 | 1.15 | 6.99 | 1.0 | 75.5 | 910 | 800 |
| E2 | 10 | 3 | 750 | 8 | 1.35 | 5.98 | 1.14 | 7.06 | 1.2 | 77.1 | 975 | 855 |
| E3 | 11 | 3 | 750 | 7 | 1.30 | 6.21 | 1.05 | 7.66 | 1.2 | 76.5 | 950 | 820 |
| E4 | 10 | 3 | 600 | 9 | 1.40 | 5.77 | 0.95 | 8.47 | 1.5 | 79.8 | 980 | 890 |
| E5 | 11 | 3 | 600 | 8 | 1.70 | 4.75 | 1.13 | 7.12 | 1.5 | 80.7 | 1085 | 905 |
| E6 | 9 | 4 | 500 | 8 | 1.50 | 5.39 | 0.85 | 9.46 | 1.8 | 83.2 | 965 | 875 |
| E7 | 8 | 4 | 550 | 8 | 1.23 | 6.57 | 0.68 | 9.93 | 1.8 | 84.1 | 1050 | 900 |
| E8 | 6 | 3 | 450 | 9 | 1.65 | 4.90 | 0.75 | 10.72 | 2.2 | 84.5 | 905 | 800 |
| E9 | 7 | 5 | 800 | 3 | 1.54 | 5.25 | 0.70 | 11.17 | 2.2 | 84.9 | 940 | 825 |
| E10 | 7 | 0.5 | 800 | 5 | 1.70 | 4.82 | 0.67 | 12.00 | 2.5 | 85.2 | 920 | 800 |
| D1 | 8 | 3 | 400 | 2 | 0.57 | 14.60 | 0.67 | 12.06 | 0.9 | 69.3 | 850 | 780 |
| D2 | 8 | 3 | 900 | 2 | 1.38 | 5.85 | 0.46 | 17.48 | 3.0 | 75.3 | 860 | 785 |

* $\beta_A$ and $\beta_B$ were respectively the half-peak widths of the diffraction peaks corresponding to Li$_2$Si$_2$O$_5$ (111), Li$_2$SiO$_3$ (111), and Si (111).
* $D_A$ and $D_B$ were respectively grain sizes of the Li$_2$Si$_2$O$_5$ grain and the Li$_2$SiO$_3$ grain calculated based on the formula.
* The initial efficiency was the initial coulombic efficiency.

EP 4 597 628 A1

3. Results and discussion

As shown in Table 1, the specific mass ratio 100:(6 to 11) of the crushed product to the alkali metal source, the specific heating rate (5°C/min or less), the specific target temperature (450°C to 800°C), and the specific holding time (3 h to 10 h) are conducive to obtaining the silicon-based negative electrode active material with the ratio of the half-peak width $\beta_A$ of the first diffraction peak to the half-peak width $\beta_B$ of the second diffraction peak being $1.0 \leq \beta_A/\beta_B \leq 2.5$. The reaction temperature of a sample D1 is less than 450°C, and the holding time is less than 3 h. In this case, the silicon-based negative electrode active material with the ratio of $1.0 \leq \beta_A/\beta_B \leq 2.5$ cannot be obtained. The reaction temperature of a sample D2 is greater than 800°C, and the holding time is less than 3 h. In this case, the silicon-based negative electrode active material with the ratio of $1.0 \leq \beta_A/\beta_B \leq 2.5$ cannot be obtained.

As shown in samples E1 to E10, the $\beta_A:\beta_B$ value thereof ranges from 1:1 to 2.5:1, the initial coulombic efficiency of the battery is 74.3% or more, the battery capacity retention rate has decayed to 80% after 905 cycles or more at 25°C, the battery capacity retention rate has decayed to 80% after 800 cycles or more at 45°C, and the free lithium content is as low as 0.50 wt% or less.

As shown in samples E2 to E9, the $\beta_A:\beta_B$ value thereof ranges from 1:2 to 2.2:1, the initial coulombic efficiency of the battery is 77.1% or more, the battery capacity retention rate has decayed to 80% after 940 at 25°C, the battery capacity retention rate has decayed to 80% after 820 cycles or more at 45°C, and the free lithium content is as low as 0.42 wt% or less.

As shown in samples E4 to E7, the $\beta_A:\beta_B$ value thereof ranges from 1:5 to 1.8:1, the initial coulombic efficiency of the battery is 79.8% or more, the battery capacity retention rate has decayed to 80% after 965 cycles or more at 25°C, the battery capacity retention rate has decayed to 80% after 875 cycles or more at 45°C, and the free lithium content is further reduced to 0.34 wt% or less.

As a control, the $\beta_A:\beta_B$ value of the sample D1 is 0.9 (< 1), the initial coulombic efficiency is only 69.3%, the battery capacity retention rate has decayed to 80% after 850 cycles at 25°C, the battery capacity retention rate has decayed to 80% after 780 cycles at 45°C, and the free lithium content was as high as 0.57 wt%.

As a control, the $\beta_A:\beta_B$ value of the sample D2 is 3.0 (> 2.5), the initial coulombic efficiency is only 75.3%, the battery capacity retention rate has decayed to 80% after 860 cycles at 25°C, and the battery capacity retention rate has decayed to 80% after 785 cycles at 45°C.

It should be noted that this application is not limited to the foregoing embodiments. The foregoing embodiments are exemplary only, and any embodiment having substantially the same technical idea and the same effects within the scope of the technical solutions of this application shall fall within the technical scope of this application. In addition, other embodiments obtained by making various modifications that can be conceived by a person skilled in the art to the embodiments or obtained by combining some of the constituent elements of the embodiments without departing from the scope of the subject matter of this application shall also fall within the scope of this application.

**Claims**

1. A silicon-based negative electrode active material, comprising $M_2Si_2O_5$ and $M_2SiO_3$, wherein M comprises one or more alkali metal elements; in an XRD diffraction pattern of the silicon-based negative electrode active material, a diffraction angle $2\theta$ has a first diffraction peak ranging from 24° to 25°, and a half-peak width of the first diffraction peak is $\beta_A$; the diffraction angle $2\theta$ has a second diffraction peak ranging from 26° to 27°, and a half-peak width of the second diffraction peak is $\beta_B$; and the silicon-based negative electrode active material satisfies $1.0 \leq \beta_A/\beta_B \leq 2.5$.

2. The silicon-based negative electrode active material according to claim 1, wherein a ratio of $\beta_A$ to $\beta_B$ is $1.2 \leq \beta_A/\beta_B \leq 2.2$, and is optionally $1.3 \leq \beta_A/\beta_B \leq 2.0$.

3. The silicon-based negative electrode active material according to claim 1 or 2, wherein $0.8° \leq \beta_A \leq 1.70°$, and is optionally $0.85° \leq \beta_A \leq 1.30°$.

4. The silicon-based negative electrode active material according to any one of claims 1 to 3, wherein a value of $\beta_B$ is $0.40° \leq \beta_B \leq 1.15°$, and is optionally $0.50° \leq \beta_B \leq 0.95°$.

5. The silicon-based negative electrode active material according to any one of claims 1 to 4, wherein a peak intensity ratio of the first diffraction peak to the second diffraction peak ranges from (0.15 to 0.6):1.

6. The silicon-based negative electrode active material according to any one of claims 1 to 5, wherein the XRD diffraction pattern of the silicon-based negative electrode active material further comprises a third diffraction peak of the diffraction angle 2θ ranging from 28° to 29°, and a peak intensity ratio of the first diffraction peak to the third diffraction peak ranges from (0.2 to 0.6):1.

7.  The silicon-based negative electrode active material according to any one of claims 1 to 6, wherein the XRD diffraction pattern of the silicon-based negative electrode active material further comprises the third diffraction peak of the diffraction angle 2θ ranging from 28° to 29°, and a peak intensity ratio of the second diffraction peak to the third diffraction peak ranges from (1 to 1.45): 1.

8.  The silicon-based negative electrode active material according to any one of claims 1 to 7, wherein a grain size of the $M_2Si_2O_5$ is smaller than a grain size of the $M_2SiO_3$.

9.  The silicon-based negative electrode active material according to any one of claims 1 to 8, wherein

    the grain size of the $M_2Si_2O_5$ ranges from 5 nm to 10 nm, and optionally ranges from 6 nm to 9 nm; and/or
    the grain size of the $M_2SiO_3$ ranges from 6 nm to 20 nm, and optionally ranges from 11 nm to 18 nm.

10. The silicon-based negative electrode active material according to any one of claims 1 to 9, wherein at least part of a surface of the silicon-oxygen composite has a coating layer; and optionally, the coating layer comprises a carbon material.

11. The silicon-based negative electrode active material according to any one of claims 1 to 10, having one or more of the following features:

    (a) a specific surface area of the silicon-based negative electrode active material is 4 $m^2$/g or less, and optionally ranges from 0.5 $m^2$/g to 1.5 $m^2$/g;
    (b) a volume average particle size Dv50 of the silicon-based negative electrode active material ranges from 4 μm to 15 μm, and optionally ranges from 5 μm to 9 μm;
    (c) a particle size distribution (Dv90-Dv10)/Dv50 of the silicon-based negative electrode active material ranges from 0.5 to 3.0, and optionally ranges from 0.8 to 1.3;
    (d) free alkali metal elements account for 1 wt% or less of a total content of alkali metal elements in the silicon-based negative electrode active material, and optionally account for 0.5 wt% or less;
    (e) a content of Si in the silicon-based negative electrode active material ranges from 20 wt% to 80 wt%, and optionally ranges from 30 wt% to 60 wt%;
    (f) the total content of alkali metal elements in the silicon-based negative electrode active material ranges from 2 wt% to 14 wt%, and optionally ranges from 2 wt% to 10 wt%;
    (g) a Si:O molar ratio of the silicon-based negative electrode active material ranges from 1:(0.6 to 1):1.8, and optionally ranges from 1:(0.9 to 1):1.5; and
    (h) M comprises at least one of Li, Na, and K.

12. A preparation method for the silicon-based negative electrode active material according to any one of claims 1 to 11, comprising the following steps:

    providing a raw material containing Si and O;
    heating the raw material by using a vapor deposition technique to form vapor, and cooling a deposit formed by the vapor;
    crushing the deposit to obtain a crushed product; and
    mixing the crushed product and an alkali metal source in a mass ratio of 100:(6 to 11), heating the mixture to 450°C to 800°C at a heating rate of 5°C/min or less, and keeping the temperature for 3 h to 10 h to obtain the silicon-based negative electrode active material.

13. The method according to claim 12, having one or more of the following features:

    (1) the raw material comprises elemental silicon and silicon dioxide;
    (2) when vapor deposition is performed, a target temperature for heating ranges from 1100°C to 1500°C;
    (3) when vapor deposition is performed, a target temperature for cooling ranges from 700°C to 900°C;
    (4) vapor deposition is performed in an environment with an absolute pressure of 40 Pa or less; and
    (5) the crushed product and the alkali metal source are mixed in a mass ratio ranging from 100:(7 to 11).

**14.** The method according to claim 12 or 13, further comprising the following step: performing coating treatment on the silicon-based negative electrode active material, wherein optionally, the coating treatment is carbon material coating treatment; and further optionally, the carbon material coating treatment comprises the following operations: placing the silicon-based negative electrode active material in a chamber containing a carbon source gas, heating the silicon-based negative electrode active material to 700°C to 1000°C, and keeping the temperature for 1 h to 6 h.

**15.** A secondary battery, comprising a negative electrode, wherein the negative electrode comprises the silicon-based negative electrode active material according to any one of claims 1 to 14.

**16.** A power consuming apparatus, comprising the secondary battery according to claim 15.

FIG. 1

FIG. 2

FIG. 3

FIG. 4

FIG. 5

FIG. 6

## INTERNATIONAL SEARCH REPORT

| International application No. |
| --- |
| **PCT/CN2023/079258** |

### A.  CLASSIFICATION OF SUBJECT MATTER

H01M4/58(2010.01)i

According to International Patent Classification (IPC) or to both national classification and IPC

### B.  FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 硅, XRD, 射线衍射, Li2Si2O5, Li2SiO3, 2θ, 衍射角, 衍射峰, 半峰宽, 晶粒, 尺寸, 大小, 体积, 粒径, 颗粒, silicon, ray, diffraction, angle, peak, width, crystal+, dimension, size, volume, particle

### C.  DOCUMENTS CONSIDERED TO BE RELEVANT

| Category* | Citation of document, with indication, where appropriate, of the relevant passages | Relevant to claim No. |
| --- | --- | --- |
| X | CN 113764642 A (GUANGDONG KAIJIN NEW ENERGY TECHNOLOGY CO., LTD.) 07 December 2021 (2021-12-07) description, paragraphs 7-114, and figure 1 | 1-11, 15-16 |
| Y | CN 113764642 A (GUANGDONG KAIJIN NEW ENERGY TECHNOLOGY CO., LTD.) 07 December 2021 (2021-12-07) description, paragraphs 7-114, and figure 1 | 12-14 |
| Y | CN 112467097 A (AMPRIUS (NANJING) CO., LTD.) 09 March 2021 (2021-03-09) description, paragraphs 66-112 | 12-14 |
| X | CN 115663153 A (GUANGDONG KAIJIN NEW ENERGY TECHNOLOGY CO., LTD.) 31 January 2023 (2023-01-31) description, paragraphs 10-197, and figure 2 | 1-11, 15-16 |
| Y | CN 115663153 A (GUANGDONG KAIJIN NEW ENERGY TECHNOLOGY CO., LTD.) 31 January 2023 (2023-01-31) description, paragraphs 10-197, and figure 2 | 12-14 |

☑ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 July 2023** | **21 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/079258** |

**C.     DOCUMENTS CONSIDERED TO BE RELEVANT**

| Category* | Citation of document, with indication, where appropriate, of the relevant passages | Relevant to claim No. |
|---|---|---|
| A | CN 107112522 A (SANYO ELECTRIC CO., LTD.) 29 August 2017 (2017-08-29) <br> entire document | 1-16 |
| A | CN 112803015 A (BTR NEW MATERIAL GROUP CO., LTD. et al.) 14 May 2021 (2021-05-14) <br> entire document | 1-16 |
| A | CN 113316855 A (SHIN-ETSU CHEMICAL CO., LTD.) 27 August 2021 (2021-08-27) <br> entire document | 1-16 |
| A | CN 114512647 A (CHANGZHOU GUIYUAN XINNENG MATERIAL CO., LTD.) 17 May 2022 (2022-05-17) <br> entire document | 1-16 |
| A | KR 20220089774 A (KOREA INSTITUTE OF ENERGY RESEARCH) 29 June 2022 (2022-06-29) <br> entire document | 1-16 |
| A | WO 2022099561 A1 (CONTEMPORARY AMPEREX TECHNOLOGY CO., LTD.) 19 May 2022 (2022-05-19) <br> entire document | 1-16 |

Form PCT/ISA/210 (second sheet) (July 2022)

## INTERNATIONAL SEARCH REPORT
### Information on patent family members

| International application No. |
|---|
| **PCT/CN2023/079258** |

| Patent document cited in search report | | | Publication date (day/month/year) | Patent family member(s) | | | Publication date (day/month/year) |
|---|---|---|---|---|---|---|---|
| CN | 113764642 | A | 07 December 2021 | DE | 102022103094 | A1 | 09 March 2023 |
| | | | | US | 2023072764 | A1 | 09 March 2023 |
| | | | | KR | 20230036949 | A | 15 March 2023 |
| | | | | JP | 2023039387 | A | 20 March 2023 |
| CN | 112467097 | A | 09 March 2021 | None | | | |
| CN | 115663153 | A | 31 January 2023 | None | | | |
| CN | 107112522 | A | 29 August 2017 | US | 2017346066 | A1 | 30 November 2017 |
| | | | | US | 10516153 | B2 | 24 December 2019 |
| | | | | JPWO | 2016121324 | A1 | 02 November 2017 |
| | | | | JP | 6685938 | B2 | 22 April 2020 |
| | | | | WO | 2016121324 | A1 | 04 August 2016 |
| CN | 112803015 | A | 14 May 2021 | WO | 2021093865 | A1 | 20 May 2021 |
| | | | | KR | 20210104114 | A | 24 August 2021 |
| | | | | EP | 3965194 | A1 | 09 March 2022 |
| | | | | JP | 2022517793 | A | 10 March 2022 |
| | | | | US | 2022328816 | A1 | 13 October 2022 |
| | | | | JP | 7236547 | B2 | 09 March 2023 |
| CN | 113316855 | A | 27 August 2021 | JP | 2020113495 | A | 27 July 2020 |
| | | | | JP | 7098543 | B2 | 11 July 2022 |
| | | | | KR | 20210110609 | A | 08 September 2021 |
| | | | | EP | 3913709 | A1 | 24 November 2021 |
| | | | | TW | 202032839 | A | 01 September 2020 |
| | | | | WO | 2020149133 | A1 | 23 July 2020 |
| | | | | US | 2022069297 | A1 | 03 March 2022 |
| | | | | JP | 2022121582 | A | 19 August 2022 |
| CN | 114512647 | A | 17 May 2022 | None | | | |
| KR | 20220089774 | A | 29 June 2022 | None | | | |
| WO | 2022099561 | A1 | 19 May 2022 | EP | 4075548 | A1 | 19 October 2022 |
| | | | | US | 2022344649 | A1 | 27 October 2022 |

Form PCT/ISA/210 (patent family annex) (July 2022)